(19) Europäisches Patentamt
European Patent Office
Office européen des brevets

(11) **EP 0 827 940 A1**

(12) **EUROPEAN PATENT APPLICATION**
published in accordance with Art. 158(3) EPC

(43) Date of publication:
**11.03.1998 Bulletin 1998/11**

(21) Application number: **96942648.5**

(22) Date of filing: **25.12.1996**

(51) Int. Cl.$^6$: **C02F 3/20**, B01F 3/04

(86) International application number:
**PCT/JP96/03793**

(87) International publication number:
**WO 97/24291 (10.07.1997 Gazette 1997/30)**

(84) Designated Contracting States:
**FR SE**

(30) Priority: **28.12.1995 JP 343368/95**
**13.08.1996 JP 231363/96**
**13.08.1996 JP 231364/96**

(71) Applicant: **Sanki Co., Ltd.**
**Sakai-shi, Osaka 590 (JP)**

(72) Inventor: **MURAKAMI, Saburo**
**Kishiwada-shi, Osaka 596 (JP)**

(74) Representative:
**Cross, Rupert Edward Blount et al**
**BOULT WADE TENNANT,**
**27 Furnival Street**
**London EC4A 1PQ (GB)**

(54) **AIR CHARGER**

(57) An air charger for generating air bubbles which can float and stable in water for a long period of time to attain water purification, activation or the like. The air charger comprises: a hollow rotating shaft (12) having an opening for introducing air; a capsule (14) mounted on the lower end of the rotating shaft (12); support means (20) for rotatably supporting the capsule (14) so as to locate the rotating shaft (12) in its upper end opening above the water surface and, at the same time, locating the capsule (14) in water; and drive means (13) for rotating the rotating shaft (12). The capsule (14) communicates with the interior of the hollow portion and has a plurality of small holes for spouting air bubbles into water, and the rotating shaft (12) is connected to the drive means (13) through a coupling.

Fig 1

EP 0 827 940 A1

## Description

TECHNICAL FIELD

The present invention relates to an improved air charger which is designed to efficiently introduce air into water in form of micro-sized bubbles and to hold the bubbles in the water for a long period of time, thereby to purify and activate the water.

BACKGROUND ART

It is well known that earth environmental problems have become major concerns for the mankind in the opposite side of the rich human life. Various attempts have been made in pursuit of more delicious food and more comfortable life. Taking for instance, a variety of additives are added to food to improve its taste or to protect human bodies from various pathogenic bacteria. Drinking water is also processed by adding chlorine, or like materials, to prevent affliction by pathogenic bacteria.

However, food additives and chlorine, etc. added to water are not favorable for human bodies, and may cause cancer and other diseases. Additionally, daily foods themselves, including fish, animal meat, such as beef and chicken, and plants, such as vegetables and fruits, are not always harmless, because antibiotics or other chemicals are added to feed and fertilizers for growing animals and plants. Although vegetables cultivated without agricultural chemicals are commercially available, non-chemical agriculture results in an increase of pathogenic bacteria such as colitis germs. Drinking water (tap water, in particular) containing chlorine and other physically harmful chemicals is not good to human health.

Consequently, it is important for human healthy life to supply drinking water and food harmless to human bodies. It is also important to find a solution how to clean contaminated ponds and lakes in our life space.

For example, an apparatus has been known heretofore, which is adapted to pump air into a pipe settled in water by means of a compressor or blower and to jet out air in form of bubbles into the water through a number of orifices formed at end portions of the pipe, for purposes of purifying and activating water in fish cultivating fields, or purifying aquicultural water. Also known is an apparatus adapted to rotate a water wheel in a surface portion of water by a motor or other appropriate drive means to thereby splash water and stir a great deal of bubbles into the water. Further known are self-suction-type water pumps, Z pumps, etc.

However, bubbles made by these conventional techniques are considerably large, more or less, in diameter in water, and therefore float up soon to the water level due to their own buoyancy. That is, bubbles, and especially oxygen, cannot be held in water long enough to perform their water-purifying functions.

Especially for eel culturing fields unsuitable for frequent supply of water, an apparatus with a high purifying capacity is required, but no conventional technique satisfies the requirement. In other words, conventional systems do not perform sufficient purifying capacities even when driven continuously, and cannot prevent that toxic substances derived from remnants of food and excreta spoil water unacceptably for fish cultivation.

DISCLOSURE OF INVENTION

It is therefore an object of the invention to provide an air charger capable of producing micro-sized bubbles which are likely to remain in water for a long time and behave to purify and activate water. A particular object of the invention is to provide an air charger capable of efficiently introducing a large amount of air in form of micro-sized bubbles into water.

To achieve the object, the invention is characterized in the use of a hollow rotation shaft having an air inlet port in its upper end to introduce air therethrough, a cylindrical capsule attached to a lower end of the rotation shaft, support means for rotatably supporting the rotation shaft in a posture to locate its upper open end above the water level and the capsule in the water, and drive means for rotating the rotation shaft, the capsule having a number of bubble-releasing orifices communicating with the hollow interior of the rotation shaft to release a number of micro-sized bubbles into water, and the rotation shaft being coupled to the drive means by a coupler.

To achieve the above-described object, another version of the present invention is characterized in the use of an outer cylinder having an opening in its upper end located above the water level, a hollow rotation shaft concentrically supported in the outer cylinder for rotation therein and air inlet ports for introducing air, and a capsule attached to the lower and of the rotation shaft positioned in water and having a plurality of bubble-releasing ports for releasing bubbles therethrough into the water, drive means for rotating the rotation shaft, and a coupler which couples the rotation shaft to the drive means.

To achieve the above-described object of the invention, another version of the present invention is characterized in that the coupler has air introducing point means for introducing air through its outer periphery and for delivering the air to the opening of the rotation shaft. To achieve the above-described object, another version of the present invention is characterized in that the air-introducing port means includes a plurality of orifices extending in radial directions to spaced circumferential portions of the coupler, and that central axes of the orifices are so oriented to extend in radial directions of the coupler, but not to pass the center of the coupler.

To achieve the above-mentioned object, another version of the invention is characterized in that center axes of the bubble-releasing orifices extend in radial directions of the capsule but do not pass the center of the capsule.

To achieve the object of the present invention, another version of the present invention is characterized in that the capsule is removably attached to the rotation shaft.

To achieve the above-described object, another version of the present invention is characterized in that the capsule is provided with air introducing means.

To achieve the above-described object of the present invention, another version of the present invention is characterized in that the air-introducing means includes a plurality of grooves arranged along the circumference of the capsule and ridges formed between the grooves at an upper portion of the capsule confronting with the lower end surface of the outer cylinder. The bubble-releasing orifices of the capsule may be located on different circumferential lines and on different axes. The capsule may be provided with major stream varying means.

In accordance with the present invention, when the rotation shaft is rotated at a high speed by the drive means, ambient air is introduced through the opening of the rotation shaft into the rotation shaft under a negative pressure caused by rotation of the capsule attached to the lower end of the rotation shaft. The introduced air is released and diffused in form of micro-sized bubbles into the water through the bubble-releasing orifices. Each of these bubble has a very small grain size (2-30$\mu$m), and remain afloat in the water for a long period of time. These air bubbles look like blows of smoke.

## BRIEF DESCRIPTION OF DRAWINGS

Fig. 1 is a partly cut-out front elevational view of an air charger in accordance with the present invention;
Fig. 2 is a partly cut-out front elevational view of major components of a coupler for coupling the electric motor to the rotation shaft, taken as another embodiment of the invention;
Fig. 3 is a perspective view of the coupler shown in Fig. 2;
Fig. 4 is a cross-sectional view of the coupler shown in Fig. 2;
Fig. 5 is a partial cut-out plan view of a capsule;
Fig. 6 is an explanatory view showing an arrangement of bubble-releasing orifices of the capsule;
Fig. 7 is a perspective view of major components showing an embodiment of air introducing means provided in the capsule;
Fig. 8 is a view showing an embodiment of an air charger used in a container;
Fig. 9 is a view showing an embodiment of an air charger applied to a pond or other water reservoir;
Fig. 10 is a cross-sectional view of an air charger taken as another embodiment of the present invention;
Fig. 11 is an enlarged perspective view of a major portion of the capsule shown in fig. 10;
Fig. 12 is a longitudinal cross-sectional view of the capsule shown in Fig. 2;
Fig. 13 is a transversal cross-sectional view of the capsule shown in Fig. 12;
Fig. 14 is an explanatory view showing general operations of the present invention;
Fig. 15 is a cross-sectional view of an air charger taken as a further embodiment of the present invention;
Fig. 16 is an enlarged, partly cut-out front elevational view showing the capsule attached to the lower end of the rotation shaft shown in Fig. 15;
Fig. 17 is an enlarged perspective view illustrating the capsule attached to the lower end of the rotation shaft shown in Fig. 15;
Fig. 18 is a longitudinal cross-sectional view illustrating the capsule shown in Fig. 16; and
Fig. 19 is a cross-sectional view of an air charger taken as a still further embodiment of the present invention.

## BEST MODE FOR CARRYING OUT THE INVENTION

An air charger embodying the present invention will be described in details herein below with reference to the drawings.

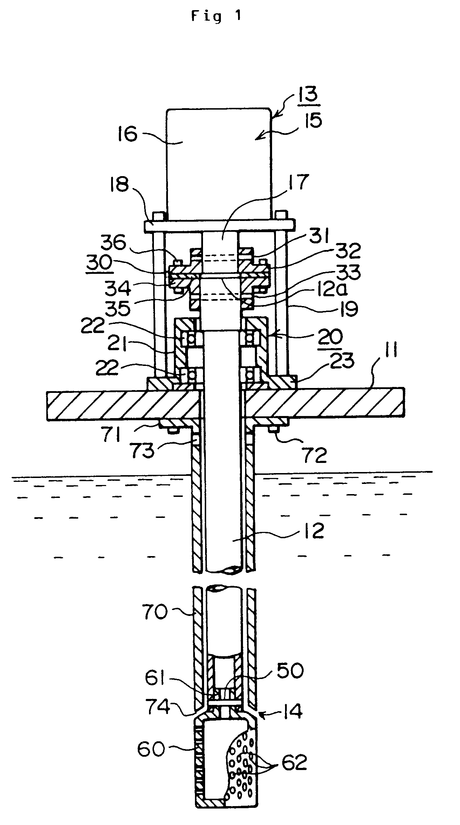

Referring to Fig. 1, there is shown substantially the entirety of an air charger embodying the present invention. The air charger can be used in water storage facilities to be purified, such as contaminated seas, lakes, ponds, etc. It is especially suitable for use in cultivating farms of fishes, shells, lavers and eels.

The air charger comprises a base 11 located above a water surface 10. The base has an appropriate thickness and is made of a plate member of a desired material. The base may be made to float on a water surface by the aid of an appropriate float (not shown), or alternatively may be fixed in position by an appropriate support. The float may be a hollow plastic member or a metallic tubular member containing a foamed styrol member, for example. The air charger should be anchored, using an anchor chain, or the like. The support may be made of, for example, a basement buried at the bottom of water, and a framework formed on the basement.

A hollow rotation shaft 12 extends through the base 11. The upper end of the rotation shaft is coupled to drive means 13, and a capsule 14 is attached to the lower end of the rotation shaft.

The drive means is preferably a highly efficient electric motor 15 which can drive the rotation shaft 12 for a long duration of time at a predetermined rotation speed. Preferably, the electric motor is rated for three-phase alternating current, 200 V, 2 to 2.5 A and 1.5 to 2 horse powers, and is changed in rotation speed by an inverter (not shown). However, any of various other rated electric motors may be used in lieu of the above example.

As shown in Fig. 1, the electric motor 15 includes a main body 16 and a drive shaft 17 extending from the main body. One and of the main body 16 has a flange 18 to which a plurality of support rods 19 is attached by any suitable means as shown in Fig. 1.

Support means 20 is mounted on the base 11 for rotatably supporting the rotation shaft 12. The support means has a cylindrical housing 21, and two bearings 22 spaced apart from each other in the axial direction of the rotation shaft within the housing. The rotation shaft engages with the inner bearing race. The present invention, however, is not limited to the illustrated number and arrangement of the bearings. Moreover, these bearings 22 may be omitted as described later.

The housing 21 has a flange 23 having a plurality of orifices (not shown) along the circumference of the housing. The base has a plurality of threaded holes (not shown) for alignment with these orifices.

Taking for instance, lower ends of the support rods 19 be threaded for engagement with the threaded holes of the base beyond the holes of the flange 23 of the support means. In this manner, the electric motor 15 and the support means 20 can be firmly mounted on the base 11 in a compact size.

Generally speaking, the rotation shaft has at least one air-inlet port for introducing air therethrough into its hollow interior, and the air-inlet port in this embodiment is an opening 12a at the upper end of the rotation shaft.

It should be noted that the rotation shaft 12 and the drive shaft 17 of the drive motor 15 are coupled directly. That is, the rotation shaft 12 and the electric motor 15 are coupled by a coupler 30. The coupler 30 is a hollow member. In one embodiment, it includes a first coupling member 32 fixed to the drive shaft 17 of the electric motor by means of, for example, a pin 31, and a second coupling member 34 to the upper end of the rotation shaft 12 by means of, for example, a pin 33. First and second coupling members 32 and 34 are fixed in a spaced and confronted relationship with each other, and are fixed by, for example, bolt means 36. The purpose of the arrangement of the first and second coupling members with a spacing 35 therebetween is to ensure that ambient air be introduced through the spacing 35 of the coupling and that the introduced air be subsequently delivered to the interior of the rotation shaft through the opening 12a of the rotation shaft when the rotation shaft 12 is rotated by the electric motor 15. The air introduced into the rotation shaft subsequently flows to the capsule.

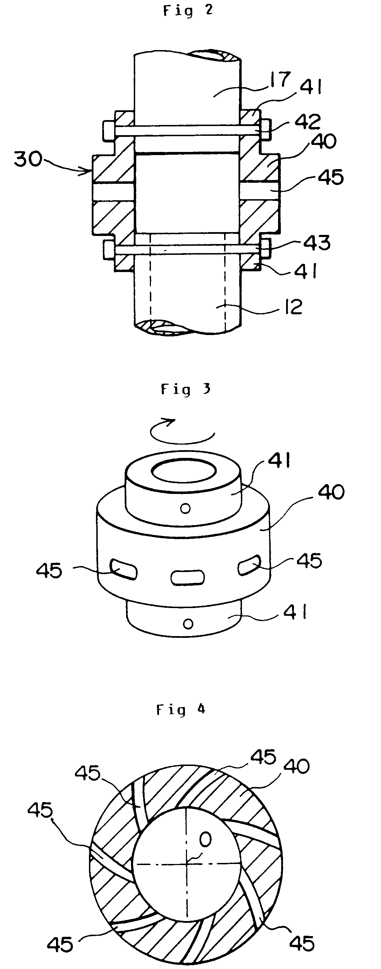

An alternative version of the coupler is shown in Fig. 2, in which the coupler includes a cylindrical main body 40 having flanges 41 formed at its upper and lower ends. Fixed to the upper flange is the drive shaft 17 of the electric motor by a pin 42. Fixed to the lower flange is the upper end of the rotation shaft 12 by a pin 43. In this case, the main body 40 of the coupler has at least one, preferably a plurality of, air-introducing ports 45. When a plurality of air-introducing ports are provided, they are spaced apart along the circumference of the main body 40 (see Fig. 3).

It should be noted that the central axes of the air-introducing ports do not pass the center O of the coupler, as spoon in Fig. 4. Additionally, it is preferable that the central axes of the air-introducing ports extend arcuately, and the air-introducing ports are formed along the arcuate-extending central axes. In other words, the air-introducing ports are formed to extend arcuately as shown in Fig. 4. In this case, when the rotation shaft, or the coupler, rotates in the clockwise direction shown by an arrow in Fig. 4, the outer opening of the air inlet ports opens in the rotational direction as shown in Fig. 4. This arrangement facilitates entry of ambient air into the coupling.

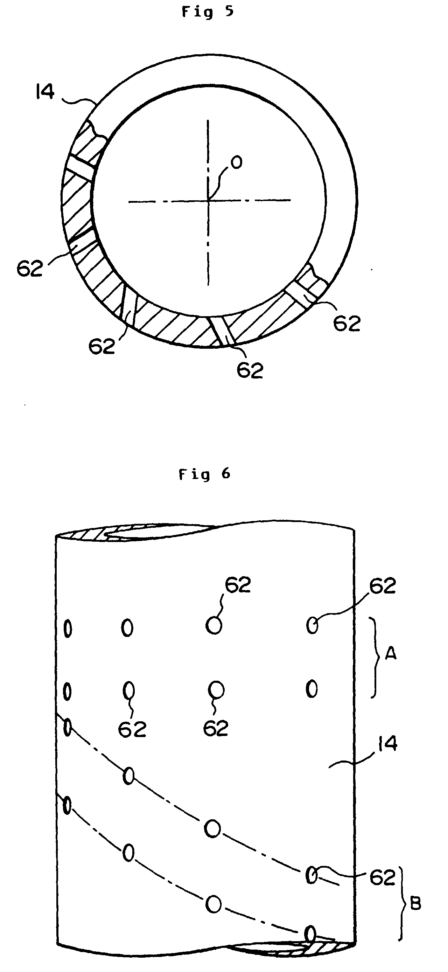

Referring again to Fig. 1, the capsule 14 attached to the lower end of the rotation shaft is a generally cylindrical member closed at its bottom. The capsule had a barrel portion 60, and an upper portion 61 more slender than the barrel portion, which is inserted into and fixed by a pin 50, for example, to the rotation shaft 12. Alternatively, the capsule may be attached to the rotation shaft by screw engagement. The capsule has formed a number of bubble-releasing orifices 62 in the barrel portion. The outer diameter of the barrel may be 50mm, for example. If the capsule has a larger diameter, such as, for example, 70mm, the peripheral speed of the barrel portion can be increased. Thus, by increasing the rotation speed of the capsule, it is possible to produce a greater negative pressure and to introduce a larger amount of air into the rotation shaft. Each air-releasing orifice 62 preferably has a diameter in the range of 1 mm to 2 mm in one embodiment. The bubble-releasing orifices may be arranged in any desired geometry, such as alignment on vertical and horizontal straight lines as shown by A in Fig. 6 or alignment on spiral lines as shown by B in Fig. 6.

It should be especially noted that the bubble releasing orifices 62 are oriented so that their control axes be inclined from lines passing the center O by 15 degrees, for example, as shown in Fig. 5. Also note that, when the rotation shaft, and hence the capsule, are turned in the clockwise direction as shown by the arrow in Fig. 5, the outer openings of the bubble-releasing orifices 62 are oriented in a direction opposite from the rotating direction.

Generally speaking, when the rotation shaft is rotated at a predetermined rotation speed by the electric motor, air is introduced into the rotation shaft through the opening of the rotation shaft due to a negative pressure caused by rotation of the capsule, then flows into the capsule, and is jetted out from the bubble-releasing orifices in form of micro-sized bubbles. This is based on the mechanism that a vacuum zone (a negative pressure condition) is produced between the outer circumferential wall of the capsule in rotation and the water, and air is sucked into the vacuum zone through the air-inlet ports, runs through the inter in space of the rotation shaft and the capsule, and is finally jetted out from bubble-releasing orifices in form of bubbles.

Referring again to Fig. 1, the base 11 is provided at its slower surface with an outer cylinder 70. The outer cylinder 70 includes a flange 71 at its upper end, and is fixed to the base 11 by bolts, for example. This outer cylinder is arranged to enclose the rotation shaft 12 under the base. The lower end of the outer cylinder is spaced by a predetermined distance from the barrel portion of the capsule 14. The outer cylinder has at least one opening 73 at its upper portion.

The outer cylinder is not indispensable for the purpose of releasing air from the bubble-releasing orifices. However, the outer cylinder behaves as bearings in the water and as means for dispensing into water the bubbles released from the lower end opening above the outer cylinder due to a negative pressure caused by rotation of the rotation shaft, i.e., the capsule.

The outer cylinder may be made of any desired material, such as metal or synthetic resin. Moreover, the above-mentioned bearings 22 can be omitted, and other bearings may be provided between the outer cylinder and the rotation shaft, near the capsule, so as to support the rotation shaft by the motor and the latter bearings.

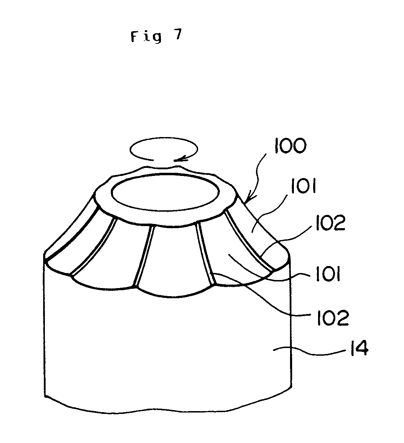

Referring to Fig. 7, there is shown another embodiment in which air introducing means 100 is provided in the capsule 14.

The air introducing means is formed around the capsule 14 in confrontation with the lower end opening 74 of the outer cylinder 70. The air-introducing means includes, for example, a plurality of grooves 101 formed in the circumference of the capsule and ridges 102 between adjacent grooves. These grooves and ridges extend arcuately. The grooves and ridges contribute to introduction of a greater volume of air into the rotation shaft and in a space between the rotation shaft and the outer cylinder.

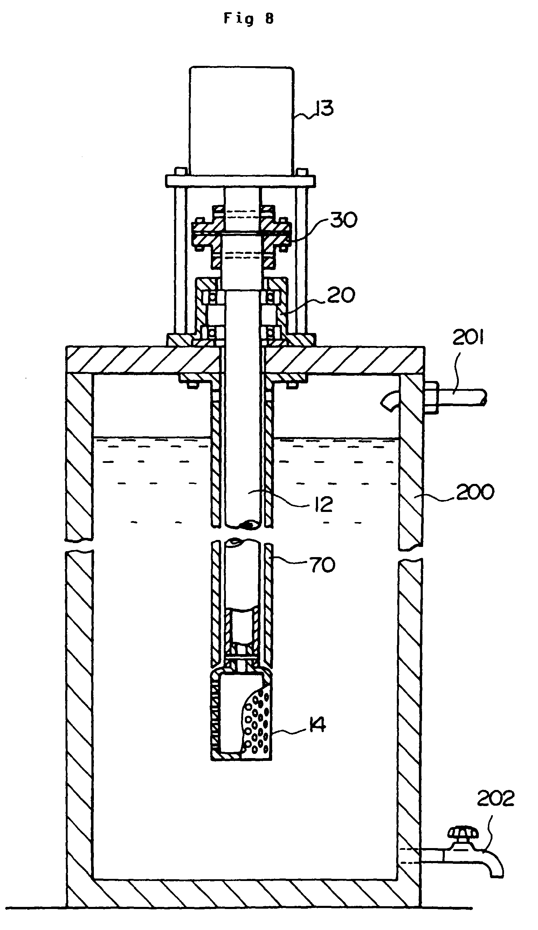

Referring to Fig. 8, the above-described is installed in a container 200 containing water to purify the water. The container includes water supply means 201 for drawing water and water discharge means 202 for discharging water.

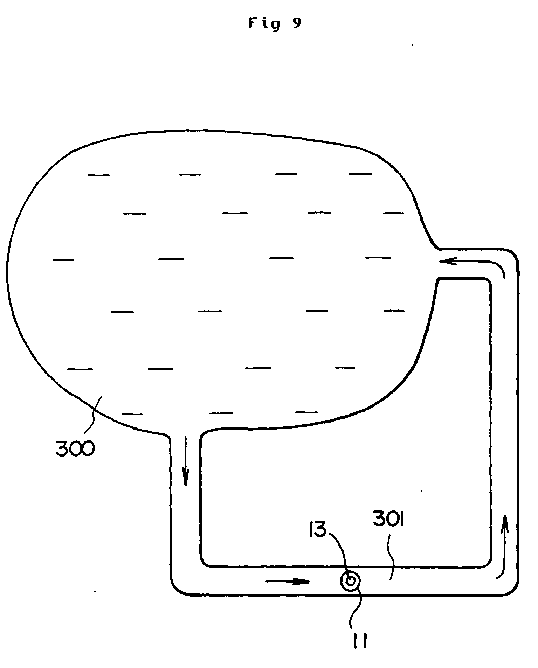

Referring to Fig. 9, an air charger embodying the invention is installed in a water circulation channel 301 provided in a water reservoir 300, such as pond or the like. The air charger used in this manner purifies water while it circulates especially in a closed site such as pond, in particular, and can purify the water in the pond efficiently in a short time.

An appropriate cover may be mounted to the base to cover the electric motor and support means. Legs may be further provided to extend down from the cover to hold the capsule above the water bottom. A protective screen or a filter may further provided around the capsule to prevent that fishes, or the like, hit the capsule in rotation, and to prevent clogging of small orifices.

Moreover, it is preferable to provide means for detecting whether the electric motor is running and for stopping the electric motor upon application of an overload on the electric motor.

The above-described air charger operates as follows.

When the electric motor 15 is driven, rotation of the motor 15 is transmitted through the coupler to the ration shaft, and rotates at a predetermined rotation speed.

As a result, water in the hollow interior of the rotation shaft 12 jets out from the bubble-releasing ports 62 of the capsule 14 due to a centrifugal force. Subsequently, fresh air is introduced through the opening of the rotation shaft 12 into its interior, and sprayed out in form of bubbles from the bubble-releasing ports 62 of the capsule 14. On the other hand, a negative pressure is created around the lower end of the outer cylinder 70 due to high-speed rotation of the capsule, and introduces air into the space between the outer cylinder and the rotation shaft through the opening at the upper end of the outer cylinder. The sprayed bubbles from the bubble-releasing ports 62 make substantially radial (substantially spiral) streams of water about the capsule 14 immediately above and near the opening 74 at the lower end of the outer cylinder 70. Due to the water streams, water between the rotation shaft 12 and the outer cylinder 70 is jetted out from the opening 74 at the lower end of the outer cylinder 70, with the aid if air introduced through the opening at the upper end of the outer cylinder 70 as explained above. Subsequently, fresh air is introduced through the opening 73 at the upper end of the outer cylinder 70, and is sprayed out in form of bubbles through the opening 74 at the lower end of the outer cylinder. These bubbles contribute to an increase of bubbles in addition to the bubbles from the capsule.

As a result, the bubbles from the opening 74 at the lower end of the outer cylinder 70 and from the bubble-releasing ports of the capsule are aerated into fine particles, and an enormous number of fine bubbles (micro-sized bubbles) are distributed widely in the water. Each of these bubbles has a minute diameter as mall as 1/1000 mm to 3/1000 mm and a small buoyancy, and therefore remain in the water for a long time. These bubbles do not easily joi8n with each other, and hold discrete forms for a considerably long time. The micro-sized bubbles run deep into the water, then disperse widely, and remain in the water for a long period of time. Therefore, oxygen and nitrogen contained in the air are brought into contact with water for long period and migrate into the water. As a result, noxious gases and organic substances in the water, such as ammonia, etc., are dissolved and removed. That is, these bubbles are highly efficient for purifying water in cultivating farms for fishes and shells and water for water cultivation of plants.

The air, when introduced, generates a static electricity due to a friction with the outer circumferential surface, etc. of the rotation shaft 12. The bubbles, after remaining in the water for a long period, explode and disappear into the ambient air. The explosion of the bubbles causes a supersonic wave, and the static electricity causes a differential potential in the water, which causes ionization of water into positive ions H+ and negative ions OH- due to electrolization. Negative static electricity is created more around the outer circumference of the rotation shaft, and it attracts positive ions H+ in the water. Consequently, negative ions OH- increase relative to positive ions, and the water becomes alkali-ionized water. When oil-spread hands were actually washed by water made by an apparatus according to the invention, the oil was certainly removed easily without using soap. This is because bubbles in alkali-ionized water wrap the oil and detach it from the hands. In this manner, the water can be purified and activated, and gets an antibacterial characteristic, a plant-growing effect, etc.

Test of Air Chargers

1. Summary of Test

A capsule having the diameter of $\varnothing$50 (conventional type) and a new one having the diameter of $\varnothing$70 were prepared, forming holes inclined by approximately 15 degrees relative to the central axis. Amounts of air (bubbles) at different rotational speeds were compared and examined by recording on a video tape.

2. Results of Test

| Inverter's Preset Frequency | Calculated Value | Measured Value |
| --- | --- | --- |
| 66.67 HZ | 4000 rpm | 3.989 rpm |
| 75.00 HZ | 4500 rpm | 4.484 rpm |
| 83.33 HZ | 5000 rpm | 4.977 rpm |
| 91.67 HZ | 5500 rpm | 5.466 rpm |
| 100.00 HZ | 6000 rpm | 5.946 rpm |
| 108.33 HZ | 6500 rpm | 6.441 rpm |
| 116.67 HZ | 7000 rpm | 6.922 rpm |

Although a small amount of bubbles was visually observed only at a speed around 5000 rpm in case of the capsule with the diameter of $\varnothing$50, and amount of bubbles was visually observed even at a speed around 4000 rpm in case of the capsule with the diameter of $\varnothing$70. Differences in volume of bubbles became salient with increase in rotating speed, and it was confirmed that a satisfactory result be achieved even at a rotation speed of 7000 rpm or less. As to air bubbles from the outer cylinder, generation of bubbles was experimentally confirmed around 6500 rpm with both the large and small capsules. More improved effect are expected by providing spiral grooves or vanes on the outer circumference of the rotation shaft.

3. Equipment Used: 2 HP

Motor: two-piece fully-closed outer-door, vertical type (1.5 kW)
Inverter: Mitsubishi multi-purpose type (for 1.5 kW)

4. Experimental Installment

Distance between capsule's outer cylinder and water level: 70 mm to 200 mm

An ozone generator may be attached to the rotation shaft near its air inlet ports. This makes it possible to sterilize water by supplying the water with fresh ozone just generated and still having a strong sterilizing power.

If a heater or other heat source is attached around the air inlet ports of the rotation shaft, then the water temperature can be readily elevated in a very natural condition to thereby prevent the water temperature from decreasing too low even in cold locations, for example.

In contrast, a cold air generator may be attached around the air inlet ports of the rotation shaft to decrease the water temperature in a very natural manner and to prevent the water temperature from rising too high even in tropical areas.

The present invention is not limited to the above-described embodiments, but the number and diameter of the bubble-releasing pots of the capsule can be modified appropriately.

It should be noted that generation of micro-sized bubbles by the invention relies on the specific relationship among the outer diameter of the capsule, diameters and locations of the bubble-releasing ports of the capsule, and the rotating speed of the capsule.

The apparatus according to the invention can be used to purify water in many applications, including swimming pools, sewage treatment plants, rivers, lakes and marshes, and to activate, purify or soften drinking water, brewing water, and water in reservoir tanks.

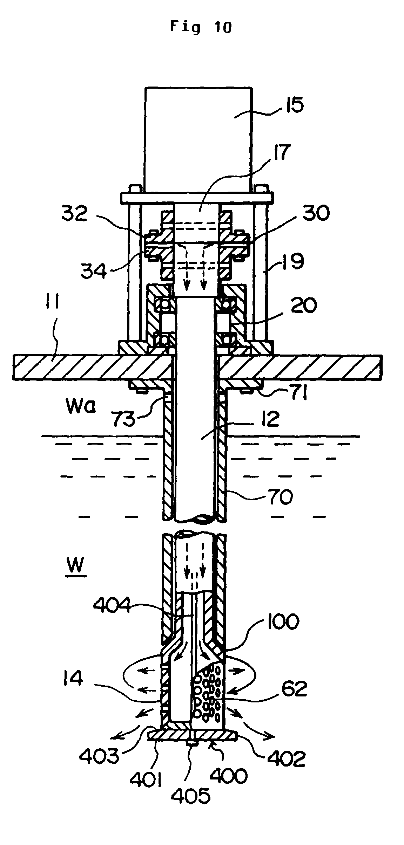

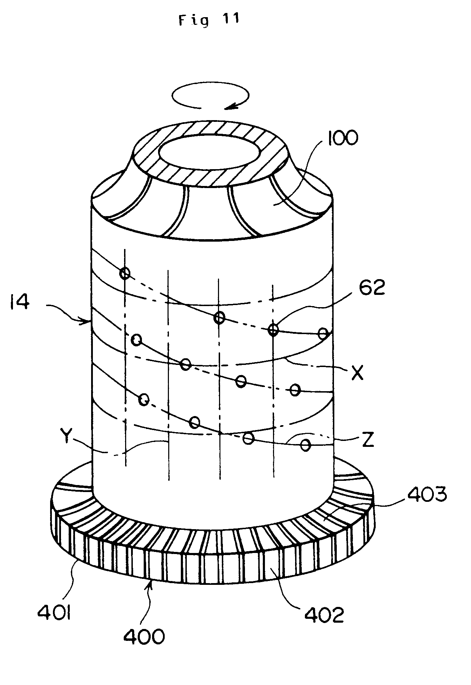

Referring to Figs. 10 through 13, another embodiment of the invention is shown. In this embodiment, a number of bubble-releasing ports provided at the lower end of the rotation shaft are arranged so that they do not lie on the same circumferential lines or the same axial lines. Further provid3d at the lower end of the capsule is a stream varying means having a larger diameter than that of the capsule.

In a more preferred embodiment, a large number of the air-releasing ports of the capsule are arranged along spiral lines, for example, so that they do not align on the same circumferential lines or the same axial lines.

In another preferred embodiment, the stream varying means is a disk-shaped plate with knurls formed on its circumference.

In another preferred embodiment, the stream varying means is disk-shaped vanes having fins on its circumference.

In Fig. 10, identical numerals are used to label identical components.

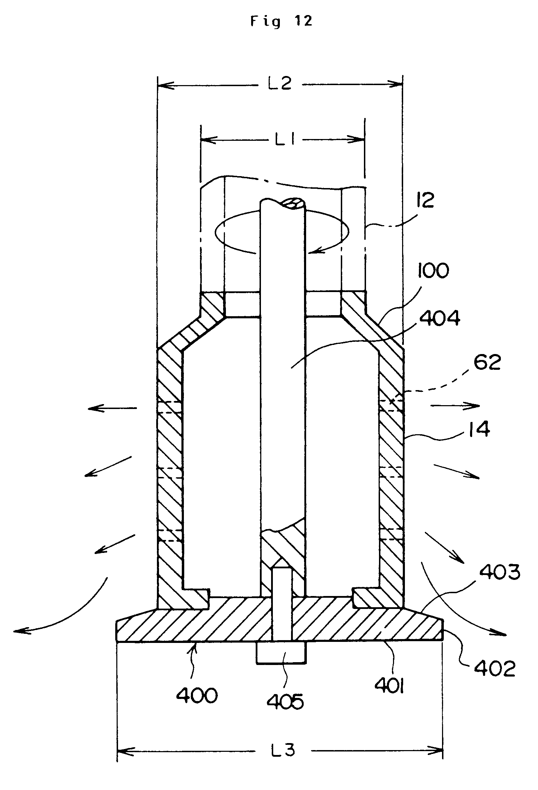

Like the above-described embodiment, the capsule 14 attached to the lower end of the rotation shaft 12 and having projected bubble-releasing ports 62 is a cylindrical member having an outer diameter L2 larger than the outer diameter L1 of the hollow rotation shaft 12, as shown in Fig. 12. Formed in the outer circumference of the capsule 14 are a number of bubble-releasing ports 62 arranged on spiral lines Z in equal intervals so that they do not lie on the same circumferential lines X or the same axial lines Y. That is, the bubble-releasing ports 62 are arranged on the spiral lines Z such that they are offset from each other in circumferential and axial directions of the capsule. Assuming that the capsule 14 has the outer diameter of 70mm, and the longitudinal length of 100mm, a number of bubble-releasing ports 62 each having the diameter of 1.2 mm are arranged on the spiral lines Z in equal intervals so that they do not lie on the same circumferential lines X and the same axial lines Y.

The number of spiral lines Z may be three, for example, and 57 bubble-releasing ports 62 are aligned on each spiral line Z in equal intervals. By arranging them in this manner, a large amount of fine bubbles can be jetted out uniformly into the water W from individual bubble-releasing ports of the capsule 14. Alignment of the bubble-releasing ports 62 on the spiral lines Z ensures wide and deep diffusion of sprayed bubbles into the water as if they were screwed down into the water.

The number and diameter of the bubble-releasing ports 62 of the capsule 14 are preferably selected appropriately, taking the outer diameter and rotation speed of the capsule 14 into account.

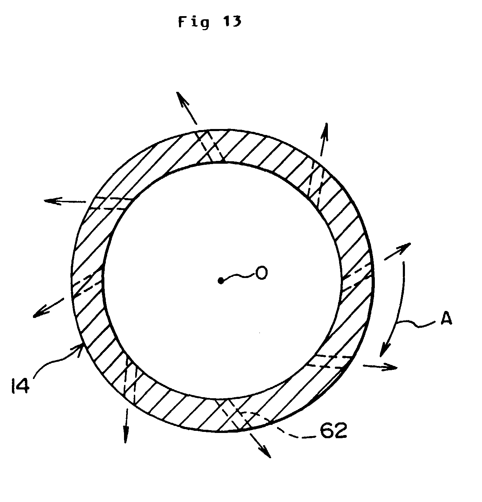

As shown in Fig. 13, these bubble-releasing ports 62 are formed to incline by approximately 15 degrees, so that their central axes do not pass the center O of the capsule 14, and thus, when the capsule 14 is turned in the clockwise direction (direction A), the outer opening of the bubble-releasing port 3 be oriented in a direction opposite from the rotation direction of the capsule. Consequently, the capsule 14 rotates smoothly without resistance, and bubbles are sprayed smoothly through the bubble-releasing ports 62 into the water due to a negative presort.

Stream varying means 400 is provided at the lower end of the capsule 14, which has an outer diameter 13 larger than the outer diameter L2 of the capsule 14, in such a manner that the means seals lower end opening of the capsule 14. The stream varying means 400 behaves to vary the flow direction of surrounding water by its own rotation caused by rotation of the capsule 14. It may be, for example, a disk 401 having knurling 402 like saw teeth on its circumference.

The circular disk 401 with a larger diameter, which rotates with the capsule 14, has a peripheral speed faster than that of the upper capsule 14 with a small diameter. Consequently, the water around the capsule 14 is forced to move around and below the lower circular disk 401, due to a differential speed between the capsule 14 and the circular disk 401. Therefore, bubbles sprayed out through the air-releasing ports 62 of the capsule 14 having a slow peripheral speed are sucked into the lower disk 401 which rotates with a fast peripheral speed, and are broken into micro-sized particles by the rough knurling portion 402 on the circumferential surface of the circular disk 401. Thus, a large volume of micro-sized bubbles are diffused deep and wide in the water W.

Arranged on the upper surface of the lower circular disk 401 is a guide passage 403 including a plurality of grooves and ridges formed around the circumference of the circular plate. As a result, the moving speed of water is further increased by the presence of the guide passage 403 under rotation of the circular plate 401, and micro-sized bubbles sprayed out from the bubble releasing ports 62 can be diffused deep into the water W. As a result, a large volume of bubbles contact the water for a long period, and thereby purifies and activates the water in an efficient manner. The circular plate 401 is fixed to the lower end of the capsule 14 by bolts 405 attached to the central shaft 404 mounted on the center of the central hollow shaft 12.

Explained below are operations of the above-described air charger.

When the electric motor 15 is rotated, its rotation is transmitted to the rotation shaft 12 via the coupling 30. Then, the water contained in the hollow interior of the rotation shaft 12 is sprayed out from the bubble-releasing ports 62 due to a centrifugal force. Subsequently, water is sprayed out in form of bubbles through the bubble-releasing ports 62 of the capsule 14 at the lower end of the rotation shaft 12.

Simultaneously, water in the cylindrical space between the outer cylinder 70 and the rotation shaft 12 is jetted out through a gap between the lower end of the outer cylinder 70 and the capsule 14. Then, the air introduced through the opening at the upper end 73 into the cylindrical space is jetted out in form of bubbles through a gap between the lower end of the outer cylinder 70 and the capsule 14.

When assuming that the water is an ideal fluid having non-compressive characteristics, water on the surface of the rotating capsule moves integrally with the surface of the capsule 14, whereas water in locations sufficiently remote from the surface of the capsule 14 remains stationary.

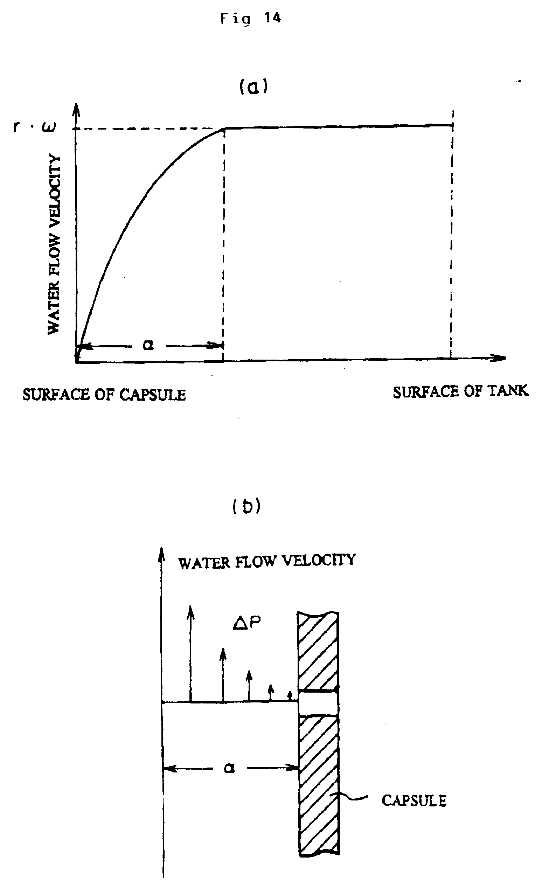

The flow velocity of water changes as shown in Fig. 14(a), when it is observed from the surface of the capsule 14.

As a result, a differential pressure is created in the direction of thickness as shown in Fig. 14(b), according to the equation given below.

$$\Delta P = 1/2 \rho V^2$$

Where,

$\Delta P$: Differential Pressure
$\rho$: Water Density 1 g/cm$^3$

$$V = r \cdot \omega$$

The differential pressure $\Delta P$ serves to introduce water from the capsule 14 (or the outer cylinder 70) to the exterior, namely, into the water.

As a result, when the capsule 14 is rotated with a reasonable speed, the air inside the rotation shaft 12 is introduced from the air-releasing ports 62 into the water, and simultaneously fragmented into the micro-sized bubbles due to the water stream created by the rotation.

Assuming, for instance, that the capsule has the diameter of 70 cm, and the rotating speed of 7000 rpm, the flow velocity (V) of the water can be calculated as follows;

$$V = 2.56 \times 10^3 \text{ cm/sec}$$

Therefore, the differential pressure can be obtained as follows:

$$DP = 1/2 (2.56 \times 10^3)^2 = 3.27 \times 10^6 \text{ g/cm sec}^2$$

Then, assuming that the depth from the water level is 70 cm at a location where air is introduced into water, the hydraulic pressure Pw at this depth can be obtained according to the equation given below:

$$\text{Hydraulic Pressure Pw} = \rho hg = 980 \times 70 = 6.86 \times 10^4 \text{ g/cm sec}^2$$

(where h is the depth (cm))

Consequently, when the capsule 14 with the diameter of 70 cm is rotated with the rotating speed of 7000 rpm, it is known that a differential pressure inside and outside the water with the depth of 70 cm increased to a value approximate 47 times greater than the above-mentioned value.

When determining a rotating speed (r · Rpm) at a critical point where the air may be introduced from the capsule 14 into the water, the flow velocity equalizing the hydraulic pressure on the surface of the capsule 14 and a differential force, i.e. a differential pressure that acts to introduce the water, can be determined as (Rpm) c = 1000 rpm , according to the equation given below.

$$Vc = \sqrt{2 x 6.86 x 10^4} = 3.7 x 10^2 \; cm/sec^2$$

$$(r \cdot Rpm)c = (Vc/2\pi) x 60 = 3535 \, cm \cdot r.p.m.$$

If rpm = 3.5 cm, then

$$(Rpm) \; c = 1000 \; rpm$$

In other words, the hydraulic pressure and the differential pressure are equal when the capsule 14 with the diameter of 70 cm rotates with the rotating speed of approximately 1000 rpm, and air begins to flow into the water when the rotation speed exceeds this value.

Moreover, in this embodiment, air guide means, or air guide channel 100 which consists of a plurality of grooves and ridges is provided on the upper portion of the capsule 14. The air which is contained in the cylindrical clearance between the outer cylinder 70 and the rotation shaft 12 is converted into bubbles and guided by rotation of the air guide passage 100 so that the bubbles may be diffused in the outer circumferential direction.

Air-releasing ports 62 are arranged in an equi-spaced relation on the spiral Z by offsetting them in position such that they do not lie on the same circumference X and on the same axis Y. That is, the air-releasing ports 62 are arranged in multiple lines by arranging them such that each port may be in an offset relation with each other toward circumferential and axial directions of the capsule. Therefore, the micro-sized bubbles may be injected evenly in a greater volume out of the capsule 14 into the surrounding water W. By arranging the air-releasing ports 62 on the spiral Z, a great volume of air which have been injected may be diffused and deeply and extensively into the water W in a manner like that it may be threaded.

The air-releasing ports 62 bored through the capsule 14 are arranged such that they are inclined with a predetermined orientation to avoid a situation that the central axes of these ports pass through the center O of the capsule 14, and that when the capsule 14 is rotated in the clockwise direction (direction A), the outer opening in the air-releasing ports 62 may be oriented in a direction opposite to that of rotation. Therefore, the capsule 14 may be rotated with no resistance received, and simultaneously the bubbles may injected through the air-releasing ports 62 smoothly in an extensive area.

A circular plate 401 with a diameter L3 greater than the outer diameter L2 of the capsule is provided on the lower end of the capsule 14, and the peripheral speed of the lower circular plate 401 with an increased diameter is made to be greater than that of the upper capsule 14 with a small diameter. Thus, the water which flows around the capsule 14 may be moved in the lower direction. Consequently, the bubbles which have been injected through the air-releasing ports 62 in the capsule 14 which rotates with a slower peripheral speed may be introduced into the lower circular plate 401 which rotates with a faster peripheral speed. An indented knurling portion 402 is formed on the circumference of the circular plate 401. Consequently, the bubbles may be fragmented into micro-sized ones in contact with the indented knurling 402 which rotates, and the volume of the bubbles may increase, whereby allowing a great deal of bubbles which have been fragmented into micro-sized ones to continuously maintain their contact with the water for an extended period of time. Therefore, it may facilitate dissolution of noxious gas and organic substances such as ammonium etc., contained in the water W for their removal. Consequently, purification and activation of the water may be carried out in an efficient manner, and thereby making the water to be optimum as a service water to be supplied to the fishery cultivating sites etc.

A guide passage 403 which consists of a plurality of grooves and ridges which are in turn formed along the circumference of the circular plate is provided upon the upper surface of the lower circular plate 401. As a consequence, the movement of the water may be further facilitated by the presence of the guide passage 403 defined in the circular plate 401, and bubbles which have been injected out of the air-releasing ports 62 in the capsule 14 may be diffused in a great volume further deeply and extensively into the water W, with a tendency that the water may be introduced downwardly and fragmented into micro-sized ones as a result of rotation of the above-described circular plate 401. As a consequence, the water quality can be purified and activated, and thus an adequate purification of water as well as its activation may be achieved.

The water stream varying means 400 which is arranged on the lower end of the above-described capsule 14 is constructed such that the circular plate 401 is fixed in position on the central shaft 405 by means of a bolt etc., but the circular plate 401 may alternatively be fixed in position on the bottom of the capsule 14 directly by welding and other means. The water stream varying means 400 may be formed from circular blades which comprises in turn fins therearound. In this case, the bubbles may be fragmented into micro-sized ones and thereby facilitating the shifting movement of the bubbles, although they receive a slightly greater rotation resistance.

In the meantime, while the circular plate 401 with the knurling portion 402 is illustrated as it is attached to the lower end of the capsule 14 in this embodiment, the bubbles may be further shifted in a lower direction when the circular plate is arranged on the upper end of the outer circumference of the capsule 14 such grooves of the knurling portion 402 may be oriented downwardly (not shown).

In this embodiment, a large volume of micro-sized bubbles may be injected evenly through the air-releasing ports bored in the circumference of the capsule, and besides a great deal of bubbles which have been fragmented into micro-sized ones may be diffused deeply and extensively into the water. Thus, the bubbles may continuously contact the water for an extended period of time, and thereby allowing the water to be purified and activated in an efficient manner. Consequently, noxious gas and organic substances can be dissolved easily, and it may be optimum if the water may be supplied as a service water to be used in the fishery cultivating sites in which fish and shell may be cultivated, and water-cultivating rice field.

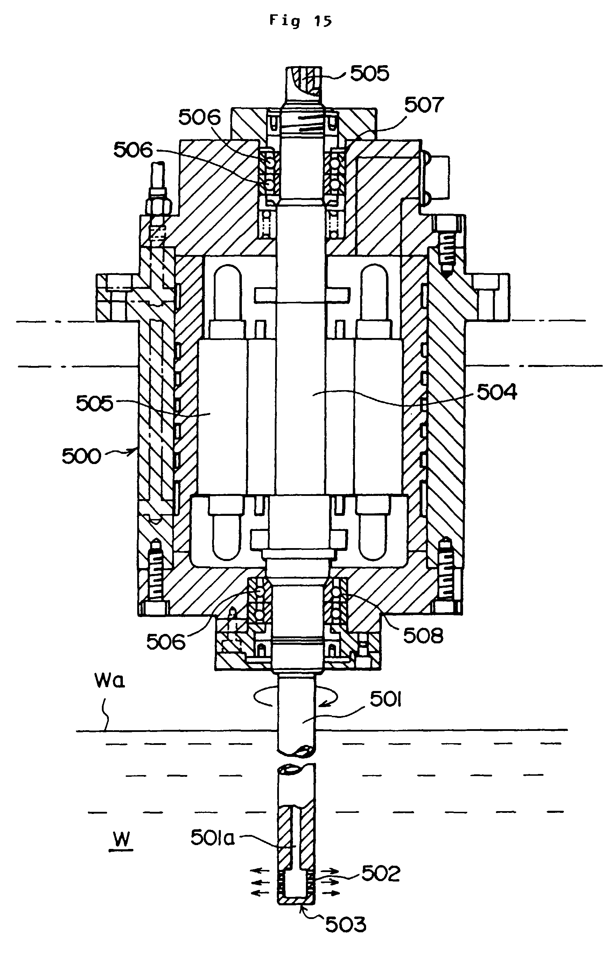

Referencing to Fig. 15 to Fig. 19, another alternative embodiments of the present invention are shown.

In these embodiments, a driving shaft of an electric motor is formed to be hollow, and a rotation shaft is coupled with this driving shaft. A capsule which is attached to the lower end of the rotation shaft is formed substantially with the same diameter with that of the rotation shaft.

In the embodiment as above-described, the capsule is formed with the outer diameter larger relative to the rotation shaft, and may receive a greater hydraulic resistance, and whereby causing a relatively large resistance to be imposed against its rotation. Consequently, a load may be imposed upon driving means which acts to rotate the capsule via the rotation shaft. As a result, a sufficient purifying efficiency may not be obtained, because it does not rotate stably and may not provide increased rotating forces.

In the present embodiment, the air charger is adapted to allow the rotation shaft to rotate in a stable manner, and to thereby improve its purifying efficiency.

The air charger in the present embodiment comprises driving means 500, a hollow rotation shaft 501 which is rotated by means of its drive means 500 and which is arranged in the water W, and a capsule 503 which is arranged on the lower end of the rotation shaft 501 and through which a multiple of air-releasing ports 502 are formed.

The drive means 500 may be, for example, an electric motor, and is supported upon the water surface Wa by means of suitable support means (not shown). The drive shaft 504 of the drive motor is rotatably supported in position by means of bearings 507 and 508 each of which consists of two bearings 506 which are respectively provided above and below the motor body 505. Consequently, the drive shaft 504 may be rotated stably even if an appreciable load is imposed, and thereby ensuring its smooth rotation.

The drive shaft 504 of the driving motor comprises a hollow shaft having an air-through port 505, and the rotation shaft 501 is directly coupled with the lower end of the hollow shaft by means of any suitable jointing means, such as welding etc. Consequently, the air may be introduced into a hollow bore 501a provided in the rotation shaft 501 from the bore 9 through which air may flow.

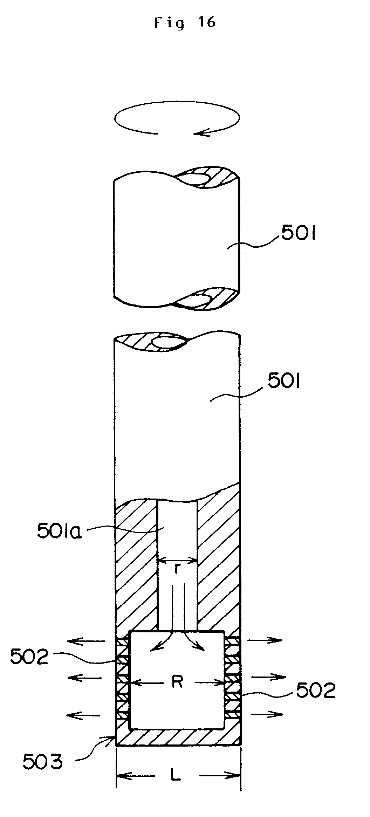

A capsule 503 having a bottom through which a multiple of air-releasing ports 502 is bored is integrally formed with the lower end of the above-described rotation shaft 501, as shown in Fig. 15 and Fig. 16. Thus, the number of parts and therefore costs can be reduced. The capsule 503 contains a space with a bore diameter R greater than the bore diameter r of the hollow bore 501a in the rotation shaft 501, and its outer diameter may be equal with the outer radius L of the rotation shaft 501. Consequently, when the capsule 503 rotates with the rotation shaft 501, less resistance may be produced to thereby reduce a load to be imposed upon the electric motor. Thus, the electric motor can run stably, and may increase its rotating forces to achieve an improved purifying efficiency. The capsule 503 is formed with an outer diameter identical with the outer diameter L of the rotation shaft 501, but the same effect may be obtained even if they have diameters slightly different from each other, and therefore they may have diameters slightly larger or smaller than those as above-described.

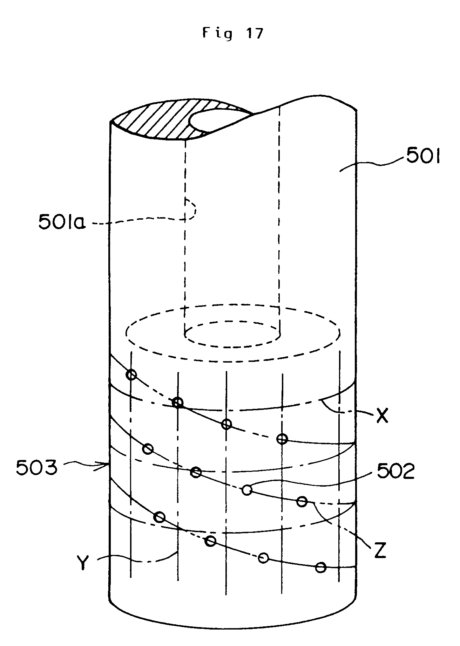

A multiple of air-releasing ports 502 are arranged in an offset and equi-spaced relationship on the spiral Z on the outer circumference of the capsule 503, so that they do not lie on the same circumference X and on the same axis Y, as shown in Fig. 17. That is, the air-releasing ports 502 are arranged on the spiral Z in an offset relationship in circumferential and axial directions of the capsule. For example, a multiple of air-releasing ports 502 with the diameter of 1.2 mm is arranged in an equi-spaced relationship upon the capsule 4 having the outer diameter of 70 mm and the longitudinal length of 100 mm on the spiral Z, and they do not overlap with each other on the same circumference X and on the same axis Y.

The number of spirals Z can be selected, for example, to be three(3), and a plurality of (fifty-seven(57)) air-releasing ports 502 are bored on each of spirals Z in an equi-spaced relationship. By forming these air-releasing ports in this manner, the micro-sized bubbles may be injected evenly from respective bubble-releasing ports 502 in the capsule 503 toward the water W.

Besides, the presence of each of the air-releasing ports 502 upon the spiral in this embodiment may ensure that the bubbles may be diffused deeply and extensively into the water W in a manner that they may be threaded, and thereby improving the water purifying efficiency.

In the meantime, the number and diameters of the air-releasing ports 502 which may be defined in the above-described capsule 503 are preferably selected, by taking into accounts the outer diameter and the rotating speed of the capsule 503.

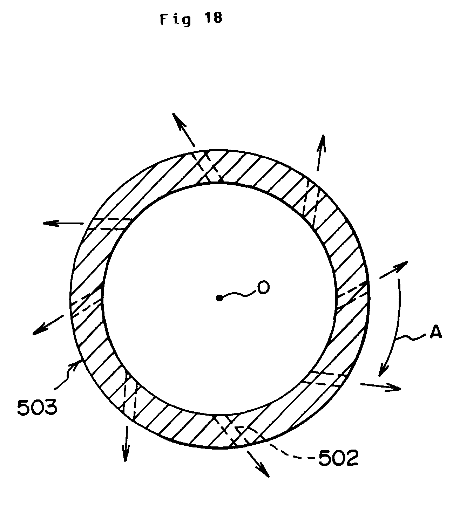

These air-releasing ports 502 are arranged with the inclination angle, for example, of approximately 15° so that their central axes do not pass through the center O of the capsule 503, as shown in Fig. 18. These air-releasing ports 502 are arranged such that their outer openings may be oriented in the direction opposite to that of rotation, when the capsule 503 is caused to rotate in the clockwise direction (Direction A). Consequently, the capsule 503 may be rotated with no resistance imposed, and thus the bubbles can be injected from the respective air-releasing ports 502 smoothly and extensively due to a negative pressure to be created. As a consequence, a multiple of micro-sized bubbles which have been injected out of each of air-releasing ports 502 may continuously be in contact with the water for an extended period of time, and thus the water can be purified and activated in an efficient manner.

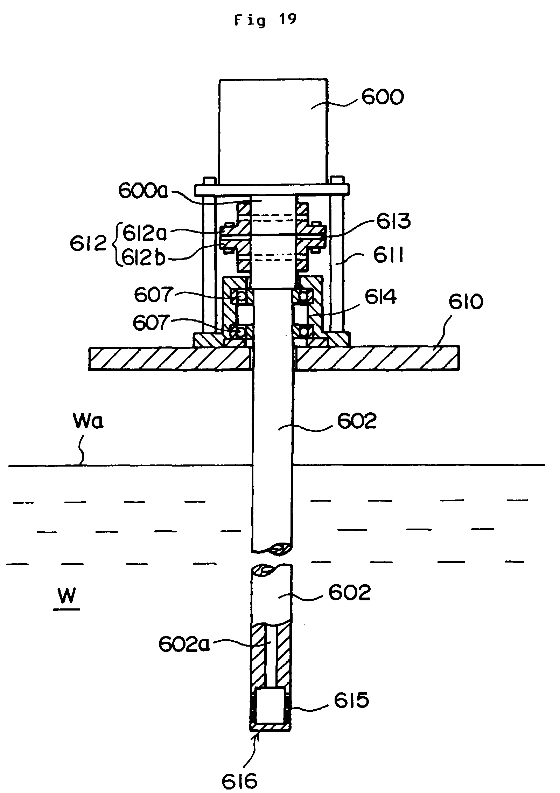

Fig. 19 shows a further alternative embodiment of the air charger of the present embodiment.

The drive means 600 consist of the electric motor, for example, and is supported upon a plurality of support rods 611 which are provided on the base 610 which is arranged on the water surface Wa. This base 610 is arranged on the frame assembly (not shown) which is submerged into the water W, for example, but it may alternatively be formed from a floatable body made from any buoyant material which is arranged above the water surface Wa.

The drive shaft 600a of the electric motor is coupled with the hollow rotation shaft 602 via the coupling 612. The coupling 612 consists of upper and lower joint member 612a and 612b, and an air-introducing port 613 is formed between upper and lower joint members 612a and 612b. Therefore, air may be introduced from this air-introducing port 613 into the hollow bore 602a in the rotation shaft 602.

The base plate 610 is provided with the bearing 614 which consists of two bearing portions, i.e., upper and lower bearing portions 607 which may rotatably support the rotation shaft 602. The rotation shaft 602 is rotatably supported in position on this bearing 614 and may rotate smoothly in a fixed direction.

The rotation shaft 602 is formed at its lower end integrally with a capsule 616. The capsule 616 has a basement through which air-releasing ports 615 are bored. Consequently, the number of parts and costs may be reduced. The capsule 616 contains a space having bore diameter larger than that of the hollow bore 602a in the rotation shaft 602 like in the previous embodiment, and is formed with the same diameter with that of the rotation shaft 602. Consequently, the rotating resistance for the electric motor may become small to reduce a load to be imposed upon the electric motor, every time when the capsule 616 rotates together with the rotation shaft 602, and thus the motor may rotate in a steady condition. Thus, a rotating force may be increased to thereby improve the water purifying efficiency.

Like the previous embodiments, a multiple of air-releasing ports 616 are arranged around the above-described capsule 616 on a spiral in an offset equi-spaced relationship such that they do not lie on the same circumference and on the same axis. Besides, the air-releasing ports 615 are arranged such that they incline with such an angle that their central axes do not pass through the center of the capsule 616, and may be oriented in a direction opposite to that in which the capsule 616 can rotate.

Consequently, the capsule 616 can be rotated smoothly with no resistance applied, and bubbles may be injected smoothly out of the air-releasing ports 615 due to a negative pressure being produced. A multiple of micro-sized bubbles which have been injected out of respective air-releasing ports 615 may continuously contact with the water for extended periods of time, and thereby ensuring that the water quality may be purified and activated in an efficient manner.

In the meantime, the capsule 616 is integrally formed with the rotating shaft 602 in the above-described embodiment, but it may be arranged by a welding etc.

As above-described, in accordance with the present embodiment, the rotating resistance of the capsule and a load to be imposed upon the drive means for rotation may be reduced by forming the capsule with the outer diameter substantially equal with that of the rotation shaft at the lower end of the rotation shaft, and thereby ensuring a stable rotation. Thus, the rotating force of the shaft may be increased so as to improve the water purifying efficiency.

Naturally, the micro-sized bubbles may be evenly injected from a multiple of air-releasing ports which are bored through the capsule. These bubbles which have been formed in micro-sizes may be diffused deeply and extensively into the water, and thereby ensuring that the bubbles may be continuously in contact with the water for an extended period so as to purify and activate the water quality in an efficient manner.

INDUSTRIAL APPLICABILITY

As above-described, the present invention may find an optimum application where the water must be purified and activated etc., such as the fishery cultivating field, pearl and oyster-cultivating fields where chlorides must be removed. Other possible applications may be found where sewage water from various sewage disposal plants must be disposed, or an area where a drinking water must be prepared for animals such as caws, pigs and poultry. Further applications of the present invention may be found in areas where a sewage water must be purified and bad odors must be removed, and other areas where the feed water must be prepared to cultivate the plants and vegetables. Several advantageous effects may be provided by the present invention as follows.

## (1) Generating Super Micro-sized Bubbles

Unlike the large sized bubbles to be fed into the water through the pump and the compressor etc., as usually found in the conventional case, the bubbles in the present invention are in super micro-sized ones and so they may remain unmovably stagnant in the water for an extended period of time to allow their adhesion to water molecules. As a result, the oxygen concentration which has been dissolved in the water may be increased, and thus a volume of oxygen which has been dissolved per unit may be become great. This may represent that the fish which has been nearly dead for reason of starving oxygen may be revived (activation).

## (2) Generating Static Electricity (Ionization)

A multiple of super micro-sized bubbles forcibly collide with each other, when they are injected out of a multiple of small bores in the capsule, producing static charges which are then charged to the respective bubbles (ionization). This may act to alter the property of water.

## (3) Absorbing Chloride

Chloride and other compounds which are present in the water may be dissolved and absorbed by means of the super micro-sized bubbles which have been ionized. Describing as a reference, it may be considered that a pathogenic bacteria can be proliferated if such chloride is removed, but it is found that the water form which chloride has been removed by means of the diffuser of the present invention has contained no trace of pathogenic bacteria for an extended period of time.

## (4) Sterilizing Pathogenic Bacteria

It is observed that the pathogenic bacteria which has been present in the water, such as colon bacillus is sterilized by the effect of the super micro-sized bubbles which have been ionized.

## (5) Proliferating Preferable Bacteria

A class of bacteria which may act preferably for the human being (good guy) may be activated through the supply of oxygen, and the undesirable bacteria (bad guy) can be sterilized in an efficient manner.

## (6) Others

Further advantageous merits can be produced, including the speedy dissolution of sludge, dissolution of hydraulic suspensions, suppression of phosphor, and preservation of ammonium and nitrous acid at their proper acidity. Furthermore, organic materials in the water and bad odors may be removed, while simultaneously purifying the water.

## Claims

1. An air charger comprising; a hollow rotation shaft having at least one air-inlet port through which air may be introduced, a cylindrical capsule which is attached to the lower end of said rotation shaft, support means which may rotatably support said rotation shaft such that said air-inlet port may be located above the water surface and said capsule may be located in the water, and drive means which may rotate said rotation shaft,
said capsule including a plurality of air-release ports each being communicated with the hollow interior and allowing bubbles to be released therethrough into the water, and said rotation shaft being coupled with said drive means through a coupling.

2. An air charger comprising ; an outer cylinder which includes an opening and may locates said opening above the water surface, a hollow rotation shaft which is rotatably arranged concentrically inside said outer cylinder, said rotation shaft including at least one air-inlet port through which air may be introduced, a capsule which is attached to the lower end of the rotation shaft and located in the water, said capsule having a plurality of air-releasing ports through which bubbles may be released, drive means for rotating said rotation shaft, and a coupling which couples said rotation shaft with said drive means.

3. The air charger as claimed in Claim 1, wherein said coupling comprises air-inlet ports which may introduce air through the outer circumference into the opening defined in said rotation shaft.

4. The air charger as claimed in Claim 1, wherein said air-inlet ports are spaced around the said coupling, said air-inlet ports including a plurality of radially extending bores, said bores being arranged such that their central axes extend in the radial direction, and they do not pass through the center of the coupling.

5. The air charger as claimed in Claim 4, wherein said bores extend in an arcuate configuration along the central axis which may extend in the arcuate direction toward the radial direction of the coupling.

6. The air charger as claimed in Claim 1, wherein said drive means comprise an electric motor with a variable revolution speed.

7. The air charger as claimed in Claim 1 or 2, wherein the central axes of said air-releasing ports in said capsule may extend in the radial direction of said capsule, but they do not pass through the center of the capsule.

8. The air charger as claimed in Claim 1 or 2, wherein said capsule may be removably attached to said rotation shaft.

9. The air charger as claimed in Claim 2, wherein said capsule is provided with air-introducing means.

10. The air charger as claimed in Claim 9, wherein said air introducing means is formed from a plurality of grooves and ridges which are arranged along the upper portion of the capsule, so that they may oppose against the lower end of said outer cylinder.

11. The air charger as claimed in Claim 10, wherein said grooves extend in an arcuate configuration.

12. An apparatus in which the air charger as claimed in Claim 1 is utilized, wherein there is provided a circulating passage for circulating the water to a water reservoir.

13. An apparatus, wherein the air charger as claimed in Claim 1 is arranged inside the container in which the water is contained, so that the water inside the container may be purified.

14. The apparatus as claimed is Claim 13, wherein said container is provided with water supplying means and means for draining the water.

15. An air charger comprising drive means, a hollow rotation shaft which is caused to rotate by said drive means, and a capsule which is located at the lower end of said rotation shaft and through which a multiple of air-releasing ports is defined,
said air-releasing ports in the capsule being arranged in a multiple number on said capsule so that they do not lie on the same circumferential and on the same axial location.

16. The air charger as claimed in Claim 15, wherein said air-releasing ports are arranged in multiple configurations on the spiral by offsetting them so that they do not lie on the same circumferential and on the same axial location on the capsule.

17. An air charger comprising drive means, hollow rotation means which is caused to rotate by said drive means and located in the water, and a capsule having a multiple of air-releasing ports defined in the lower end of the rotation shaft, water stream varying means with the outer diameter larger than that of said capsule being provided on the lower end of said capsule.

18. The air charger as claimed in Claim 17, wherein said water stream varying means comprise a circular plate around the circumference in which knurls are defined.

19. The air charger as claimed in Claim 17, wherein said water stream varying means comprises a circular blade with fins around the circumference thereof.

20. An air charger comprising drive means, a hollow rotation shaft which is provided at the lower end of said rotation shaft, said hollow rotation shaft including a multiple of bubble-releasing ports defined therein, and a capsule which is provided at the lower end of said rotation shaft, said capsule having an outer diameter substantially the same with that of said rotation shaft.

21. The air charger as claimed in Claim 20, wherein said capsule is formed integrally with the lower end of the rotation shaft.

Fig 1

Fig 2

Fig 3

Fig 4

Fig 5

Fig 6

Fig 7

Fig 8

Fig 9

300

13

301

11

Fig 10

Fig 11

Fig 12

Fig 13

Fig 14

(a)

SURFACE OF CAPSULE

SURFACE OF TANK

(b)

CAPSULE

Fig 15

Fig 16

Fig 17

Fig 18

Fig 19

## INTERNATIONAL SEARCH REPORT

| | International application No. |
|---|---|
| | PCT/JP96/03793 |

**A. CLASSIFICATION OF SUBJECT MATTER**

Int. Cl$^6$  C02F3/20, B01F3/04

According to International Patent Classification (IPC) or to both national classification and IPC

**B. FIELDS SEARCHED**

Minimum documentation searched (classification system followed by classification symbols)

Int. Cl$^6$  C02F3/20, B01F3/04

Documentation searched other than minimum documentation to the extent that such documents are included in the fields searched

| Jitsuyo Shinan Koho | 1926 – 1997 |
|---|---|
| Kokai Jitsuyo Shinan Koho | 1971 – 1997 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 5-192680, A (Takekazu Kajizono), August 3, 1993 (03. 08. 93)(Family: none) | 1, 2, 6-8, 12-16, 20, 21 |
| Y | JP, 60-102927, A (Kanji Sakai), June 7, 1985 (07. 06. 85), Claim (Family: none) | 1, 2, 6-8, 12-16, 20, 21 |
| Y | JP, 7-13839, Y2 (Yugen Kaisha Yamashita Seisakusho), April 5, 1995 (05. 04. 95)(Family: none) | 1, 2, 6-8, 12-16 |
| Y | JP, 3-43990, Y2 (Noboru Yoshida, Seiji Saito), September 13, 1991 (13. 09. 91)(Family: none) | 1, 2, 6-8, 12-16 |
| Y | JP, 7-155785, A (Susumu Sato, Hidetsugu Tsunekubo), June 20, 1995 (20. 06. 95)(Family: none) | 20, 21 |
| A | JP, 60-227891, A (Dainichi-Nippon Cables, Ltd.), November 13, 1985 (13. 11. 85)(Family: none) | 1 - 21 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| March 31, 1997 (31. 03. 97) | April 8, 1997 (08. 04. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)